Europäisches Patentamt

European Patent Office

Office européen des brevets

(11) Veröffentlichungsnummer: **0 432 669 A2**

## EUROPÄISCHE PATENTANMELDUNG

(21) Anmeldenummer: 90123595.2

(22) Anmeldetag: 07.12.90

(51) Int. Cl.5 **B61D 17/02**, B61D 27 00

(30) Priorität: 09.12.89 DE 3940719

(43) Veröffentlichungstag der Anmeldung:
**19.06.91 Patentblatt 91/25**

(84) Benannte Vertragsstaaten:
**AT CH DE ES FR GB IT LI**

(71) Anmelder:
**INDUSTRIEANLAGEN-BETRIEBSGESELLSCH-
AFT M.B.H.
Einsteinstrasse 20
W-8012 Ottobrunn(DE)**

(72) Erfinder: **Weichselbaum, Siegfried
Jahnstrasse 19
W-8919 Utting(DE)**

(74) Vertreter: **Bohnenberger, Johannes, Dr. et al
Meissner, Bolte & Partner
Widenmayerstrasse 48 Postfach 86 06 24
W-8000 München 86(DE)**

(54) Verfahren und Vorrichtung zur Drucküberwachung in Reisezugwagen.

(57) Auf Hochgeschwindigkeitsstrecken werden druk-kertüchtigte Reisezugwagen eingesetzt, um die Fahrgäste vor Ohrenschmerzen zu schützen, die bei Tunnelein- und -ausfahrten oder bei Zugbegegnungen infolge von Druckstößen entstehen können. Da die Druckdichtigkeit der Wagen mit der Betriebsdauer nachläßt, wird ein Diagnoseverfahren benötigt, um festzustellen, wann ein Wagen nachgedichtet werden muß. Die Erfindung beschreibt ein derartiges Verfahren und eine technische Realisierung, die auch witterungs- oder höhenbedingte Druckveränderungen berücksichtigt.

Figur 1

## VERFAHREN UND VORRICHTUNG ZUR DRUCKÜBERWACHUNG IN REISEZUGWAGEN

Die Erfindung betrifft ein Verfahren sowie die entsprechende Vorrichtung zur Drucküberwachung schnellfahrender Reisezugwagen.

Für den Betrieb auf Hochgeschwindigkeitsstrecken (Schiene oder Magnetbahn) werden in zunehmendem Maße Reisewagen eingesetzt, die druckertüchtigt sind, um den Fahrgästen unangenehme Ohrenschmerzen aufgrund der Druckstöße bei Tunnelein- und -ausfahrten zu ersparen bzw. diese Effekte soweit möglich zu reduzieren. Die Druckdichtigkeit der Wagen läßt im Laufe der Betriebszeit nach, z.B. infolge Verschleiß an den Übergangsdichtungen oder wegen Störungen in der Klimaanlage. Deshalb wird eine Diagnosemethode benötigt, um den Grad der Undichtigkeiten und die Häufigkeit unzulässiger Druckanstiege im Wageninneren festzustellen; aufgrund der Diagnosewerte wird entschieden, ob und wann eine Nachdichtung durchgeführt werden muß.

Da sich die Problematik erst mit den neuesten Entwicklungen trassengebundener Verkehrstechnik stellt, kann auf einen diesbezüglichen Stand der Technik nicht aufgebaut werden.

Der Erfindung liegt daher die Aufgabe zugrunde, ein Verfahren und dessen technische Realisierung dergestalt bereitzustellen, daß die Veränderungen des Innendruckes in den Reisewagen bei starken äußeren Druckveränderungen quantitativ erfaßt werden und daß die Anzahl der Überschreitungen vorgebbarer Soll-Grenzwerte pro Zeiteinheit registriert wird. Dabei sind die atmosphärischen Druckveränderungen ebenso zu berücksichtigen wie die Druckveränderungen infolge der geländebedingten Trassenhöhen über NN, die der Zug während einer Fahrt überwindet.

Diese Aufgabe wird erfindungsgemäß wie folgt gelöst
(Figur 1):
Ein Behälter 1 mit ca. 0,2 bis max. 2 Litern Volumen ist über ein regelbares Drosselventil 2, das eine sehr kleine Durchgangsöffnung besitzt, gegen den Fahrzeuginnenraum offen, dadurch herrscht im Ruhezustand im Behälter 1 derselbe Druck $p_n$ wie im Passagierraum. Die Drosselöffnung ist so klein, daß sie bei relativ schnellen Druckschwankungen (ca. 1 - 5 sec.) keinen Ausgleich im Behälter 1 zuläßt, sie dient einzig dem Ausgleich allmählicher Schwankungen, z.B. durch Witterungs- und Höhenänderungen. Der Behälter 1 steht über eine Rohrleitung 13 mit einem Druckdifferenzaufnehmer 3 in ständiger Verbindung. Der Druckdifferenzaufnehmer 3 besitzt eine direkte Öffnung 14 zum Innenraum, durch die der momentane Innendruck $p_i$ mit seinen kurzzeitigen Schwankungen aufgenommen wird. Die Drücke $p_n$ und $p_i$ werden in Spannungssignale umgesetzt. Damit kann ein Signal gebildet werden, das proportional zu $P_i - P_n$ ist. Dieses Signal wird in einem Verstärker 4 verstärkt und durchläuft eine Temperaturkompensation 5, die verhindert, daß z.B. bei Erwärmung des Differenzdruckaufnehmers 3 ein Signal abgegeben wird. Die Einheit 3 mit 4 und 5 ist bekannte Technik. Das verstärkte und temperaturkorrigierte Signal durchläuft zur Dämpfung der kurzfristigen Spitzenausschläge einen Tiefpaßfilter 6 und einen Differenzierer 7, der die erste Ableitung von d $(P_i - P_n)/dt$ bildet. Das dadurch erzielte Signal, das das Steigungsmaß der Druckdifferenzänderung darstellt, wird einer Auswertungsschaltung 8 zugeführt und dort gegen einen vorgebbaren Soll-Wert verglichen. Untersuchungen zufolge wird die Schmerzempfindlichkeitsgrenze des menschlichen Ohres überschritten, wenn ein Druckanstieg von mindestens 100 - 300 pa/sec über eine Dauer von wenigstens 3 sec auftritt. Dann ist eine Nachdichtung des Fahrzeuges 10 erforderlich. Die Auswerteschaltung 8 stellt fest, ob der Druckanstieg pro vorgegebenem Zeitintervall (z.B. 3 sec) den Soll-Wert erreicht oder überschreitet und gibt ggf. einen Impuls an den Zähler 9, der registriert, wie häufig die Überschreitungsfälle z.B. pro Fahrt oder Tag waren. Zur genauen Überwachung der Druckverläufe über der Zeit wird ein Schreiber 12 eingesetzt, der auch den Außendruck und die äußeren Druckstöße über einen Drucksensor 11 erfaßt und protokolliert. Die Bauelemente 6 -9, 11 und 12 sind ebenfalls bekannte Technik. Die bauliche Ausführung erfolgt so, daß die gesamte Drucküberwachungsvorrichtung mobil ist, um die Druckveränderungen an verschiedenen Stellen des Wagens 10 bzw. nacheinander in verschiedenen Wagen aufnehmen zu können. Bei festem Einbau einer Vorrichtung zur Drucküberwachung im Zug können die Drucksignale $P_{ij}$ und $P_{aj}$ für jeden Wagen j erhoben werden, dies erfordert auswertungsseitig j Sätze der Elemente 6 - 9.

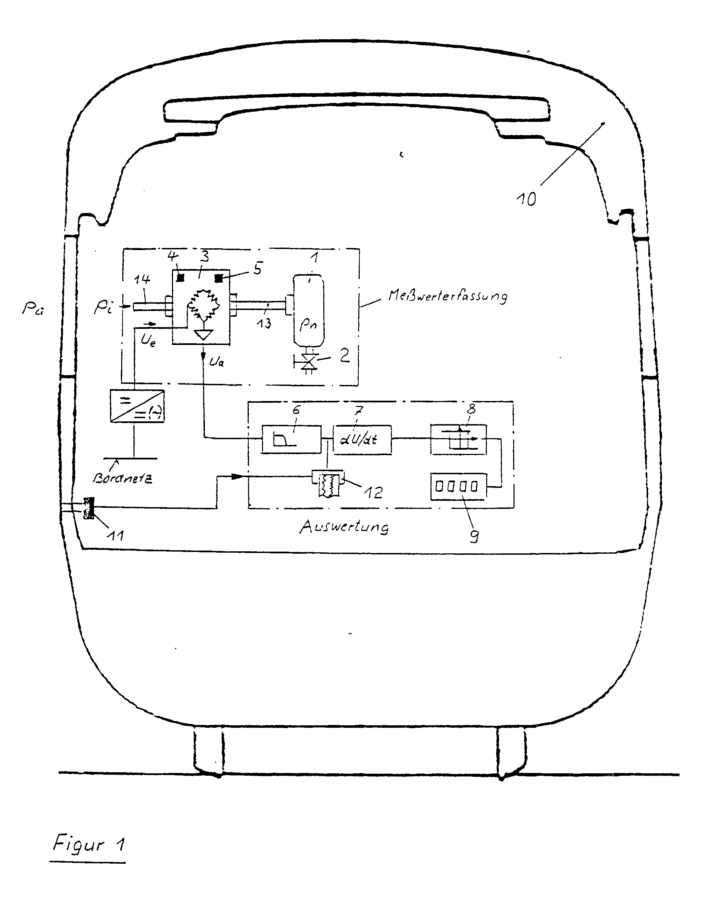

## Ansprüche

1. Verfahren und Vorrichtung zur Drucküberwachung in Reisezugwagen (10), **gekennzeichnet dadurch,**
   - daß ein Behälter (1) mit einem regelbaren Drosselventil (2) mit sehr kleiner Durchgangsöffnung vorhanden ist, der den Innendruck $p_n$ des Fahrzeuges geglättet und zeitverzögert an einen Differenz-Druckaufnehmer (3) weiterleitet, der laufend die zu dem momentanen In-

nendruck $p_i$ bestehenden Differenzdruck-werte bildet und

- daß diese zur Auswertung einen Tiefpaßfilter (6) und einen Differenzierer (7) durchlaufen und in einer Auswertungsschaltung (8) auf Überschreitung eines vergebbaren Soll-Wertes abgeprüft werden und

- daß die Anzahl der Sollwertüberschreibungen in einem Zähler (9) registriert wird.

2.  Verfahren und Vorrichtung wie in Anspruch 1, **gekennzeichnet dadurch,** daß die Differenz-druckwerte in einem Verstärker (4) verstärkt werden und eine Temperaturkompensation (5) durchlaufen.

3.  Verfahren und Vorrichtung wie in Anspruch 1, **gekennzeichnet dadurch,** daß der Außen-druck $p_a$ über einen Drucksensor (11) aufgenommen und das Signal dem Schreiber (12) zugeleitet wird.

4.  Verfahren und Vorrichtung wie in den Ansprüchen 1 und 2, **gekennzeichnet dadurch,** daß die Meßwerte $p_a$, $P_i$ und $p_a$ - $p_n$ absolut und als Funktion der Zeit in einem Schreiber (12) protokolliert werden.

5.  Verfahren und Vorrichtung nach Anspruch 1, **gekennzeichnet dadurch,** daß die Elemente (1 - 5) und (6 - 9 mit 12) zu einer transporta-blen Einheit zusammengefaßt sind.

Figur 1